# EUROPEAN PATENT SPECIFICATION

(11) **EP 1 076 288 B1**
(45) Date of publication and mention of the grant of the patent: **21.11.2007**
(21) Application number: 00306881.4
(22) Date of filing: 11.08.2000
(51) Int. Cl.: G06F 9/44, G06F 3/00, G06F 3/16

(54) **Method and system for multi-client access to a dialog system**
Verfahren und Vorrichtung zum Zugriff auf ein Dialog-System für mehrere Klienten
Méthode et système d'access multi-client à un système de dialoge

(30) Priority: 13.08.1999 US 374026
(43) Date of publication of application: 14.02.2001
(73) Proprietor: International Business Machines Corporation, Armonk, NY 10504 (US)
(72) Inventor: Coffman, Daniel F., Winchester, Hampshire SO21 2JN (GB); Gopalakrishnan, Popani, Winchester, Hampshire SO21 2JN (GB); Ramaswamy, Ganesh N., Winchester, Hampshire SO21 2JN (GB); Kleindienst, Jan, Winchester, Hampshire SO21 2JN (GB); Chalapathy, Neti V., Winchester, Hampshire SO21 2JN (GB)
(74) Representative: Davies, Simon Robert

(56) References cited:
- US-A- 5 555 169
- LAU R ET AL: "WebGALAXY: beyond point and click -- a conversational interface to a browser" COMPUTER NETWORKS AND ISDN SYSTEMS, NORTH HOLLAND PUBLISHING. AMSTERDAM, NL, vol. 29, no. 8-13, 1 September 1997 (1997-09-01), pages 1385-1393, XP004095333 ISSN: 0169-7552
- "CLIENT APPLICATION PROGRAM INTERFACE FOR CONTINUOUS SPEECH RECOGNITION SYSTEM" IBM TECHNICAL DISCLOSURE BULLETIN, IBM CORP. NEW YORK, US, vol. 37, no. 4A, 1 April 1994 (1994-04-01), pages 325-326, XP000446687 ISSN: 0018-8689

## Description

The present invention relates to conversational computer systems, and more particularly to conversational systems with automatic speech recognition, natural language understanding and dialog management for multi-client access.

The paper entitled "WebGALAXY: beyond point and click- a conversational interface to a browser" COMPUTER NETWORKS AND ISDN SYSTEMS NORTH HOLLAND PUBLISHING, AMSTERDAM, NL, Vol 29, no. 8-13, 1 Sept 1997, XP004095333 discloses a multimodal user interface system which integrates spoken and typed natural language queries and hypertext navigation.

State-of-the-art conversational systems such as those described in Lamel et al., "The LIMSI ARISE System for Train Travel Information," International Conference on Acoustics, Speech and Signal Processing, Phoenix, Arizona, March 1999 and Ward et al., "Towards Speech Understanding Across Multiple Languages," International Conference on Spoken Language Processing, Sydney, Australia, December 1998, have focused on a single access method (limited to either a desktop or a telephone). As more and more information is available in electronic form, with the information interaction becoming increasingly complex, it is desirable to provide access to information using the most natural and efficient interfaces. In particular, it is desirable to provide efficient interfaces with several devices (such as desktops, telephones and personal digital assistants (PDAs)) that can potentially be used to access information and to design interfaces that are similar and intuitive across a wide range of access methods and input/output modalities. However, such systems pose a design challenge due to the complexity needed to realize such a design.

Therefore, a need exists for a system and method for a multi-client access to a dialog system. A further need exists for a multi-client access system which provides an efficient platform for natural speech interaction.

According to one aspect of the present invention, there is provided a method for accessing a dialog system employing a plurality of different clients comprising:
providing a first client device for accessing a conversational system;
presenting a command to the conversational system by converting the command to a form understandable to the conversational system; interpreting the command by employing a mediator, a dialog manager and a multi-modal history to determine the intent of the command based on a context of the command;
determining by the mediator a second client device based on a predetermined device preference and on the first client;
based on the command context, the first and second client selecting an application to perform the command; and
sending results of the performance of the command to the second client device.

According to a second aspect of the present invention, there is provided a program storage device readable by machine, tangibly embodying a program of instructions executable by the machine to perform method steps for accessing a dialog system employing a plurality of different clients, the method steps comprising:
providing a first client device for accessing a conversational system;
presenting a command to the conversational system by converting the command to a form understandable to the conversational system;
interpreting the command by employing a mediator, a dialog manager and a multi-modal history to determine the intent of the command based on a context of the command;
determining a second client device based on a predetermined device preference;
abstracting an application to perform the command; and
sending results of the performance of the command to the second client device.

Methods, which may be implemented by a program storage device readable by machine, tangibly embodying a program of instructions executable by the machine, for accessing a dialog system employing a plurality of different clients, include providing a first client device for accessing a conversational system and presenting a command to the conversational system by converting the command to a form understandable to the conversational system. The command is interpreted by employing a dialog manager and a multi-modal history to determine the intent of the command based on a context of the command (and possibly a type of device employed to present the command). A second client device is determined based on a predetermined device preference stored in the conversational system. An application is abstracted to perform the command, and the results of the performance of the command are sent to the second client device.

In other methods, which may be implemented by a program storage device, the first client device may the same as the second client device or the second client device may be a plurality of client devices. The first client device and the second client device may include at least one of a telephone, a computer, a personal digital assistant or equivalent devices. The command may be presented in natural speech, the steps of recognizing the speech and converting the speech to a formal language may be included. The steps of outputting the results of the performance of the command to the second client device by speech synthesis may also be included. The command may be presented graphically, and the step of responding to the command by one or both of a graphical result and synthesized speech may be included. The step of providing a component abstraction interface to interface with applications such that the conversational system is shielded from details of execution of the application may be included. The step of querying a user via the first client device for information about the device preference and/or clarification of command information may also be included. The mediator preferably employs information about the first client device and/or the second client device to determine the context of the command.

According to a third aspect of the present invention, there is provided a system for accessing a dialog system employing a plurality of different clients, comprising:
a device handling and abstraction system adapted to provide input and output interfacing to a plurality of different client devices, the device handling and abstraction system for receiving commands from at least one client device and converting the commands to a form acceptable to a conversational system;
the conversational system coupled to the device handling and abstraction system for receiving converted commands, the conversational system adapted to interpret the converted commands based on a context of the command to determine an appropriate application responsive to the converted command, the conversational system including a device preference to which results of executing the converted commands are sent; and
an application abstraction system coupled to the conversational system and adapted for determining which applications are appropriate for executing the converted command, the application abstraction system being adapted to interface with a plurality of applications and to shield the conversational system from communications with the applications.

Systems for accessing a dialog system employing a plurality of different clients include a device handling and abstraction system adapted to provide input and output interfacing to a plurality of different client devices. The device handling and abstraction system receives commands from at least one client device and converts the commands to a form acceptable to a conversational system. The conversational system is coupled to the device handling and abstraction system for receiving converted commands. The conversational system is adapted to interpret the converted commands based on a context of the command (and possibly the device used to present the command) to determine an appropriate application responsive to the converted command. The conversational system includes a device preference to which results of executing the converted commands are sent. An application abstraction system is coupled to the conversational system and is adapted for determining which applications are appropriate for executing the converted command. The application abstraction system is further adapted to interface with a plurality of applications and to shield the conversational system from communications with the applications.

In alternate embodiments, the plurality of different client devices may include at least one of a telephone, a computer, a personal digital assistant, or equivalents. A command may be input to a first client and a result may also be received by the first client. The commands may include graphical commands and speech commands. The results of executing the converted commands may be conveyed to a client device as one of or both of synthesized speech and graphics. The device preference may include a plurality of client devices. The converted commands may include a formal language converted from natural speech. The conversational system may include a dialog manager and a multi-modal history to determine the intent of the converted commands based on a context of the commands. The conversational system preferably includes a mediator which employs information about at least one of the plurality of different client devices and a client device of the device preference to determine the context of the command.

Some preferred embodiments of the invention, provided by way of example, will now be described in detail in the following description with reference to the drawings, wherein:
FIG.1 is a block diagram of an illustrative system architecture which supports multi-client access, in accordance with the present invention;
FIG.2 is a block/flow diagram of an example of a device handling and abstraction system;
FIG.3 is a block/flow diagram of an example of a conversational system;
FIG.4 is a block/flow diagram of an example of an application abstraction system and applications;
FIG. 5 is a block/flow diagram of a system/method for accessing a dialog system employing a plurality of different clients, in accordance with the present invention
FIG. 6 is a schematic diagram of a conversational system;
FIG. 7 illustratively depicts a multi-modal history;
FIG. 8 illustratively depicts a dialog manager;
FIG. 9 is a block/flow diagram of a system/method for determining and maintaining dialog focus in a conversational speech system;
FIG. 10 is a block/flow diagram showing dialog manager interaction with decision networks;
FIG. 11 illustratively depicts various threads of execution for a single command;
FIG. 12 is a schematic diagram illustratively showing a simple decision network;
FIG. 13 is a schematic diagram illustratively showing interaction between two decision networks; and
FIG. 14 is a block/flow diagram of a system/method for modeless operation.

The present invention is directed to conversational systems which can be accessed from multiple client devices, such as a desktop computer, a telephone, a personal digital assistant (PDA) or other client devices, for example a pager, etc. The invention provides methods for building a conversational system that supports access from multiple client devices, while preserving the "system personality" and conversational context across the access methods. Further, at the same time, the present invention customizes the presentation of information for a particular client device. A conversational speech interface in accordance with the present invention can be accessed from a variety of client devices and can form the basis for a seamless and pervasive interface for information interaction. This invention also supports multiple input modalities (conversational and graphical).

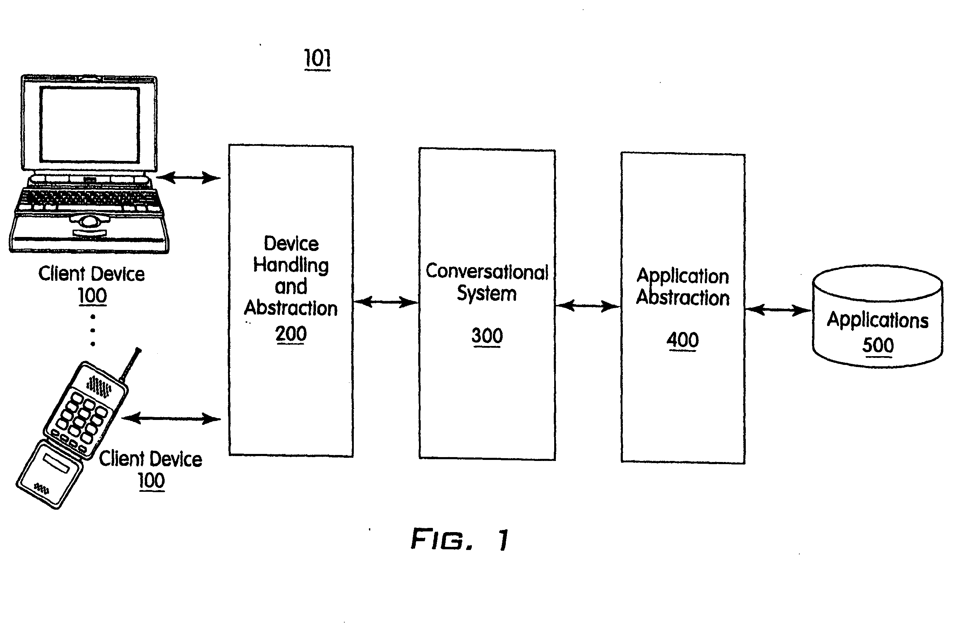

It should be understood that the elements shown may be implemented in various forms of hardware, software or combinations thereof. Preferably, these elements are implemented in software on one or more appropriately programmed general purpose digital computers having a processor and memory and input/output interfaces. Referring now to the drawings in which like numerals represent the same or similar elements and initially to FIG. 1, an illustrative example of a system architecture for a system 101 which supports multi-client access, according to the present invention, is shown. A user or users connect to the system 101 via client device 100, examples of which include a computer, a telephone, a personal digital assistant (PDA), etc. A device handling and abstraction subsystem 200 connects the client device 100 and to a conversational system 300. Conversation system 300 is responsible for natural language understanding and dialog management, and connects to an application abstraction system 400. The application abstraction system 400 is responsible for communicating with the application components included within applications 500. Examples of applications may include electronic mail applications, electronic calendar applications, electronic address book applications, spread sheet application, etc. Each component shown in FIG. 1 will now be described in greater detail below.

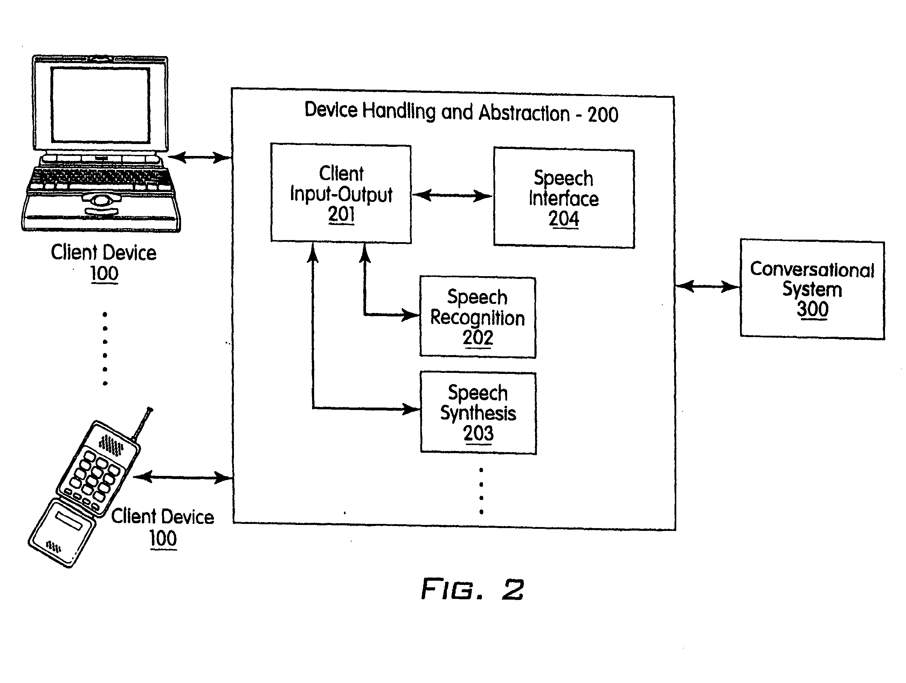

Referring to FIG. 2, device handling and abstraction subsystem 200, according to the present invention, is schematically shown. The device handling and abstraction subsystem 200 handles the connection to the client device 100. For each type of client device, such as a desktop computer, laptop computer, telephone, PDA, etc., there is a client input-output 201, speech recognition system 202, speech synthesis system 203 and speech interface 204. The client input-output 201 receives the input from the user, which may either be a graphical input or a spoken input, or a combination of both, depending on the capabilities of the client device 100. When the input is a spoken input, speech recognition system 202 performs speech recognition on the spoken input to generate recognized text corresponding to the spoken input. Methods for performing speech recognition are known in the art. The recognized text from speech recognition system 202 is sent to the speech interface 204. The speech interface 204 communicates with conversational system 300, by providing the recognized text and the identity of the client device 100 to the conversational system, and by receiving the response from the conversational system 300. In one embodiment of the invention, the response from the conversational system 300 to the speech interface 204 is in the form a string of text to be converted to speech and played back to the user. The conversion from text to speech is performed by speech synthesis system 203. Methods for text to speech conversion are known in the art. The present invention may be able to utilize speech recognition system 202, speech synthesis system 203 and/or speech interface 204 for different client devices 100 or multiple client devices of a same type, for example on a computer network or a communications network.

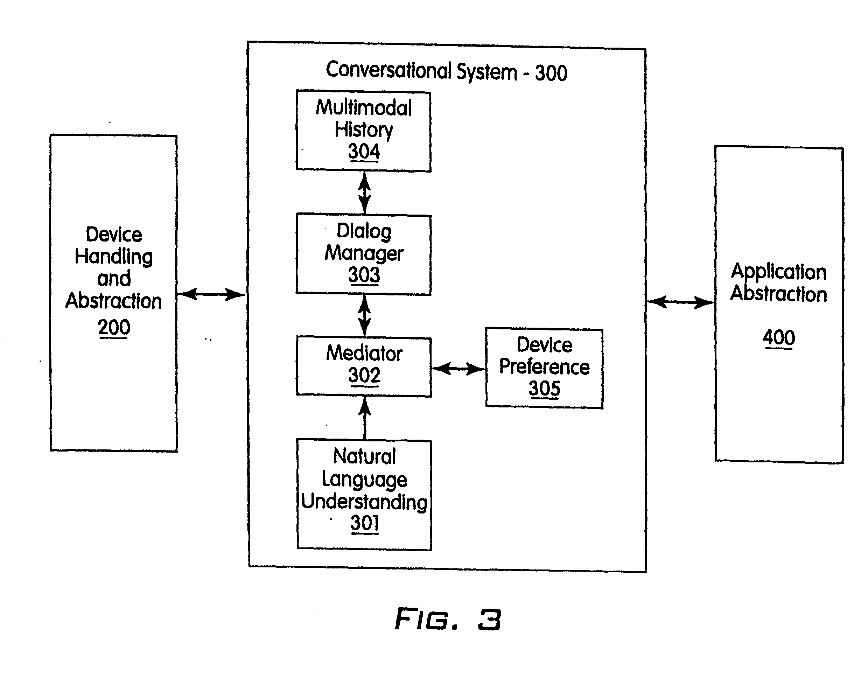

Referring to FIG. 3, an illustrative example of the conversational system 300, according to the present invention, is schematically shown. The conversational system 300 includes a natural language understanding (NLU) unit 301, a mediator 302, a dialog manager 303, a multi- modal history 304 and a device preference 305. The natural language understanding unit 301 translates the recognized text from the speech recognition system 202 to a formal command corresponding to the user's intention. For example, in an electronic mail application, the user may say, "Please tell me if I have any new messages," or the user may say, "do I have any new mail", and in both cases, the user's input may be translated into a formal command which may be of the form: check_new_mail(). The formal command, along with the identity of the client device 100 that was used to generate input, is passed to mediator 302.

Both the formal language statement and the identity of the input device are passed to the mediator 302. The mediator 302 decides on what decision network (or other element of dialog management, if decision networks are not used) based not only on the formal language statement, but also on the input device 100 (the device that generated the input/command) and the output device (specified in device preference 305). The same formal language statement may result in a different system behavior if the devices involved are different. For example, if a command includes "compose the body of the message" from a desktop, the system will start dictation using speech recognition employed by the desktop computer. However, if a user says the same thing from a telephone, and given that speech recognition accuracy is rather poor from a telephone for large vocabulary composition, the system may instead start audio recording and send the message as an audio attachment. Similarly, the output device (from device preference 305) may also determine the system behavior. For example, if the user says "what appointments do I have tomorrow", the calendar for tomorrow may be displayed on the desktop, but on a telephone, the first few entries or a summary may be read out. Therefore, in accordance with the present invention, the system behavior may depend on the devices involved.

The mediator 302 communicates with the device preference 305, which includes the user's preference for the client device 100 to which the output should be presented. In many cases, the output client device 100 would be the same as the input client device 100, but the user may specify a different client device for the output when necessary. For example, the user may choose to generate the input using a telephone, which does not have a graphical display, and have the output sent to a PDA, which does have a graphical display, or to another user's client device. The user may specify the desired output client device using either a graphical input or a spoken input. Using graphical input, the user may open a user preference file in device preference 305 and specify the desired output client device. The output device may include a specific device or a plurality of devices which may be the same or different types of devices. Using spoken input, the user may say "send the output to my desktop", which may be translated to a command of the form "select_device (output_device=desktop)", and the preference will be set.

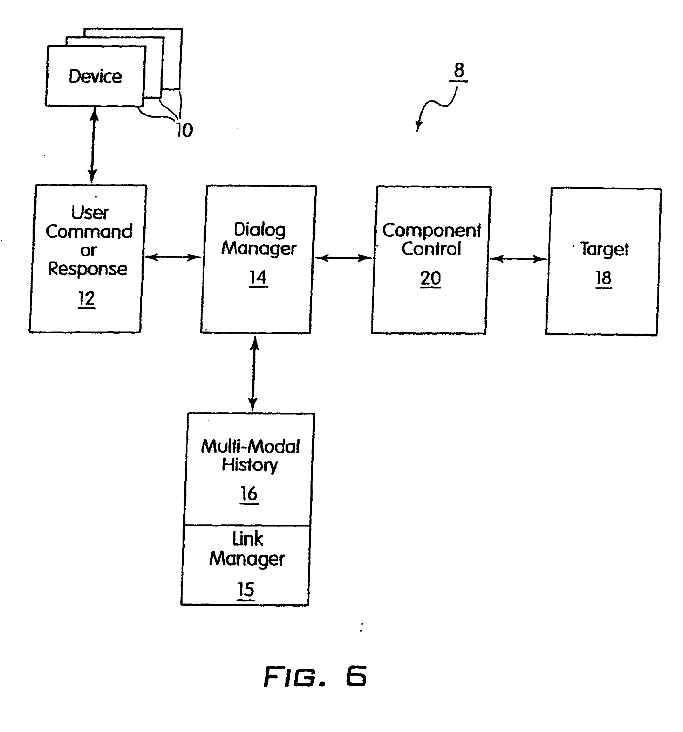

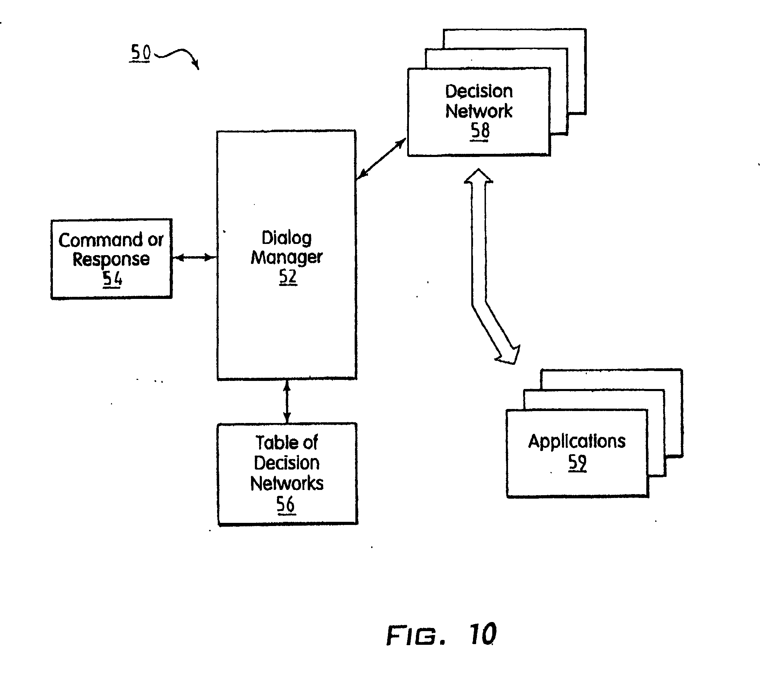

In one embodiment, the dialog manager 303 employs decision networks, as described hereinafter with respect to FIGS. 10 to 14. A decision network is a recipe(s) for accomplishing a specific transaction. Other arrangements, such as those described with respect to FIGS. 6 to 9, may also be used to build the dialog manager 303 and/or the multi-modal history 304. It is to be understood that the multi-modal history 304 captures all events, as well as the devices 100 used to generate the events, and the modality used. All of this information may be needed in some cases to resolve ambiguities, etc. and determine the context of input/commands.

Each combination of formal command and identity of the input and output client devices 100 maps to one decision network. The mediator 302 determines the appropriate decision network to spawn, based on the formal command and the identity of the input and output client devices. Once the appropriate decision network is spawned, the dialog manager 303 communicates with the application abstraction system 400 to accomplish the transaction represented by the formal command. Once the transaction is completed, the response is formatted according to the capabilities of the output client device as specified in device preference 305, and subsequently sent to the output client device for presentation to the user. Formatting of the response is necessary because different client devices will have different capabilities. For example, if the user says "go to the next message," and the output client device is a desktop with a display, then the response may be to highlight the next message, with no audio output. But, if the output client device is a telephone, with no display, then an audio output of form "message selected" may be played out on the output client device.

The multi-modal history 304 captures all system events, both spoken and graphical, from all client devices, and keeps track of the system state. The dialog manager 303 uses the multi-modal history 304 for disambiguation and reference resolution. For example, if the user says "open that", then the dialog manager 303 will communicate with the multi-modal history 304 to resolve which object was referred to by "that". Since all system events are recorded, the user may mix different input modalities (spoken or graphical) on the same client device, or on different client devices. For example, the user may select a message using a mouse click on the desktop, and later say "delete that" from a telephone, and the selected message will be deleted.

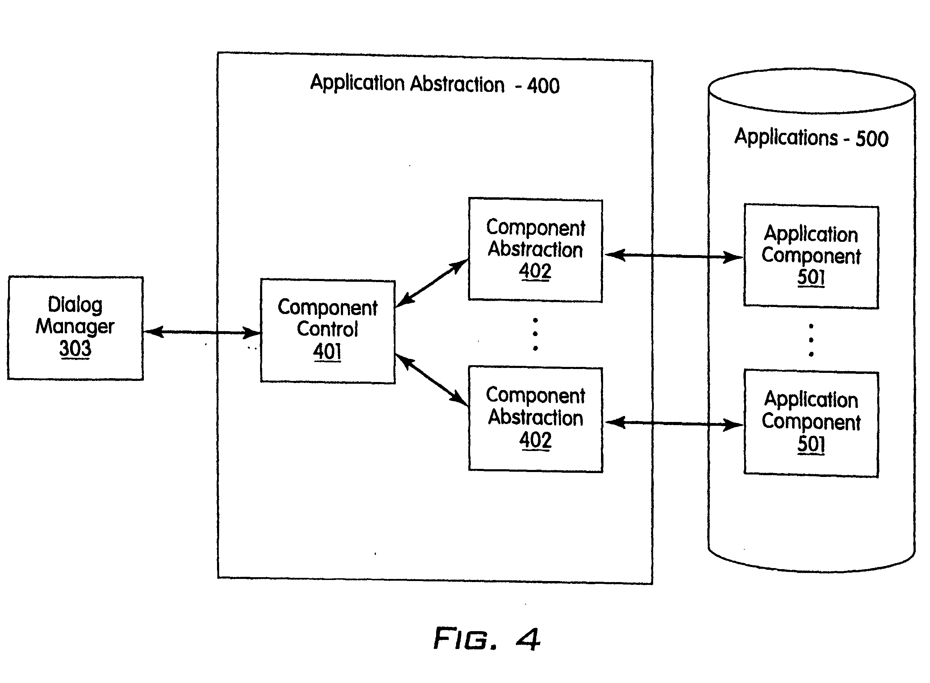

Referring to FIG. 4, an illustrative example of the application abstraction system 400 and applications 500, according to the present invention, is schematically shown. The application abstraction system 400 includes a component control 401 and a set of component abstractions 402 corresponding to each application component 501 in applications 500. Examples of application components 501 are electronic mail, electronic calendars, electronic address books, etc. The component control 401 serves to create instances of and maintain references to the abstraction components 402. In addition, the component control 401 functions as a "switch yard" for forwarding commands to the appropriate application component 501 and accumulating the responses. The application components 501 shield the conversational system 300 (FIGS. 1 and 3) from the details of applications 500, allowing a very high level of communication, since the conversational system 300 does not need to have information on how a specific command is to be accomplished. The applications 500 may therefore be interchanged with no changes necessary to the conversational system 300; only the abstraction components 402 need to be changed.

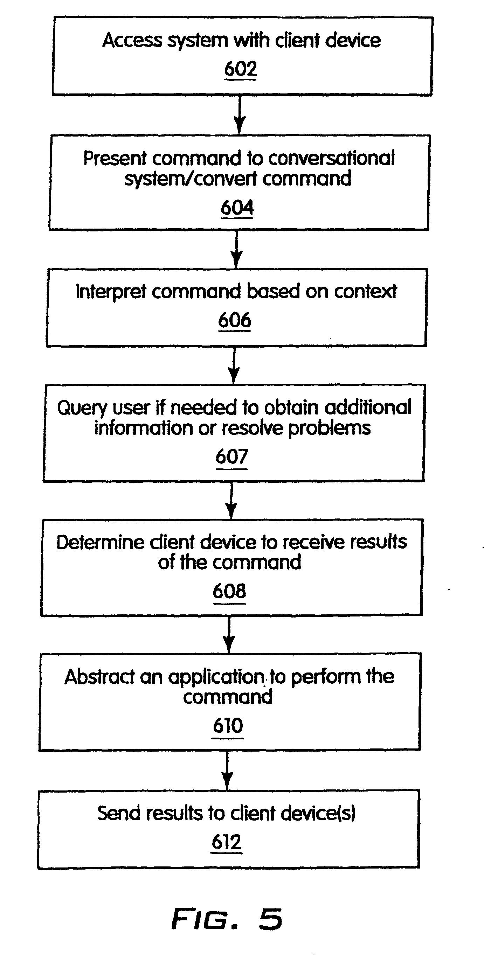

Referring to FIG. 5, a block/flow diagram is shown for a system/method for accessing a dialog system employing a plurality of different clients in accordance with the invention. The client devices may include at least one of a telephone, a computer, a personal digital assistant, etc. In block 602, a first client device is provided for accessing a conversational system. In block 604, a command is presented to the conversational system by converting the command to a form understandable to the conversational system, for example converting a human utterance to a formal language command.

In block 606, the command is interpreted by employing a dialog manager and a multi-modal history to determine the intent of the command based on a context of the command. The context of the command may be based, at least in part, on the client devices used as an input device or as an output device. In block 607, a user may be queried through the client device to determine additional information, for example, information about the device preference or clarification of the command information. In block 608, a second client device is determined based on a predetermined device preference stored in the conversational system. The predetermined device preference may include the same device, a plurality of devices or a specific other client device. In block 610, an application is abstracted to perform the command, and the results of the performance of the command are sent to the second client device. In block 612, the results of the performance of the command are sent to the second client device for speech synthesis, graphical representation, or both depending on the client devices involved.

Reference will now be made to FIGS. 6 to 9 of the drawings which show a system for determining and maintaining dialog focus in a conversational speech system comprising:
a dialog manager adapted to receive commands from a user, the dialog manager maintaining a current dialog focus and a list of expected responses for determining a current context of the commands received;
a multi-modal history coupled to the dialog manager for maintaining an event list of all events which affected a state of the system, the multi-modal history adapted to provide input to the dialog manager for determining the current context of the commands received; and
a control component adapted to select at least one method responsive to the commands received such that the system applies methods responsive to the commands for an appropriate application.

Referring initially to FIG. 6, a block/flow diagram is shown for a system/method for the implementation of dialog management for a multiple client conversational system 8. In block 10, various client devices such as a personal computer (PC), telephone, or personal digital assistant (PDA) (or other devices) may all be used as clients. The architecture by which this is accomplished according to the invention is as described above in relation to FIGS. 1 to 5. Each of these devices of block 10 has different input modalities. For example, the PC may have a keyboard, mouse, and microphone; the telephone may have a microphone and numeric keypad; the PDA may have a stylus. In block 12, any of these devices may be used to initiate a new command to the system 8 or to respond to a query from the system 8. The conversational system 8 further supports the use of any application the user desires. For example, an electronic mail (e-mail) application might be active simultaneously with a calendar application and a spreadsheet application. The application the user interacts with need not be explicitly selected. In the case of the PC, this application need not be in the foreground or graphical focus, or indeed even visible. In the case of most of the input modalities described above, the intended action is clear. If the user pushes a button on the PC with his mouse, for example, the user's intention is obvious because of the constraints placed on the user by the application's design. The button can only perform one action. Similar constraints apply for the PDA's stylus and the numeric keypad of the telephone. However, a spoken interface presents no such constraints.

A user communicates with a spoken interface in much the same way the user would with a human. The user describes actions much more complex than those possible with an input device such as a mouse. The user also is able to speak in a natural manner with the system deciding what the user intends, carrying out this action, if possible, and prompting the user if more information is needed.

An intended target of a spoken command may not be at all obvious. In a system with several applications active simultaneously, each application may be capable of responding to the same spoken command. Thus, the target is determined dynamically, on an utterance-by-utterance basis. In a conversational system, the situation is even more complicated. The target may be one of the active applications if the utterance represents a command, but if it represents the response to a query from the system itself for more information, the target will be the pending action which generated the query. A concept related to, but distinct from, the target is that of dialog focus. This is the application with which the user is currently interacting. As such it represents the best hypothesis of the target of a command. When resolving the target of a command, the application with dialog focus is usually examined first to determine whether it can accept the command. This dialog focus may be implicitly or deliberately changed. If the user launches a new application, it will be granted dialog focus in the assumption that the user wishes to interact with the new application. The user may also request to bring a different application into the foreground and it will then be granted dialog focus.

A multi-modal system permits user input through a variety of modalities. In many cases, a spoken command will be superior, but there are certainly cases where, for example, a single mouse click may be more efficient or more to the user's liking. These non-speech inputs often change the context of the system, and the conversational system should be made aware of this. If, for example, the user starts a new application by using his mouse, the conversational system should know this to direct spoken commands to the new application. To this end, the arrangement presents a mechanism for capturing and maintaining a complete history of all events concerning the system 8, i.e., speech or non-speech events, the result of user input or of system output. A multi-modal history 16 is created and this multi-modal history 16 plays a role in deducing a target 18 of spoken commands.

FIG. 6 shows those components of the conversational system 8 used to determine the target 18 of a spoken command or response (block 12). This command or response 12 is presented to a dialog manager 14 for processing. In one embodiment, what is given to the dialog manager 14 is not the actual spoken command, but rather an element of a formal language representing the meaning of the command 12. In this manner, there may be many human utterances which convey the same meaning to the dialog manager 14. The actual form of this formal language may be "command(argument1=value1, ..., argumentj=valuej)" where "command" represents the nature of the action to be taken or response, and "arguemtl=valuel" represents a qualifier to this command. In this manner the utterance "Do I have anything scheduled for tomorrow?" would be transformed into the formal language"query_calendar(day=tommorow)". Alternately, the dialog manager 14 may be capable of handling direct human utterances, for example, by including a speech recognition system.

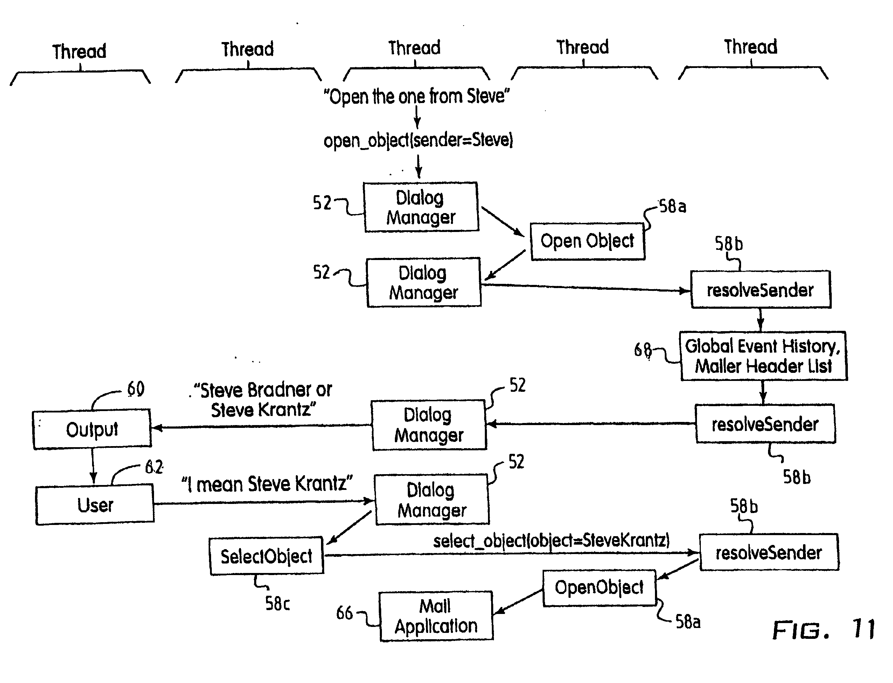

One purpose of the dialog manager 14 is to identify the intended target 18 of the command and a method for completing the command. The dialog manager 14 examines the formal language, extracts the command, and locates a corresponding method. In one embodiment these methods are implemented using independent decision networks, as described hereafter in relation to FIGS. 11 to 14.

The determination of the correct target 18 proceeds through examination of the nature of the command and the current context of the system 8. This context may be obtained from the multi-modal history 16.

A component control 20 acts as a "switch yard". Component control 20 maintains a reference to all currently active applications. The target 18 determined by the dialog manager 14 is of an abstract nature. That is, the target 18 refers to a type of application, not its implementation. The dialog manager 14 may, for example, determine that the target 18 is a calendar component, but it has no knowledge of which particular application implements a calendar. This degree of abstraction permits a suite of applications currently active to be modified dynamically, at the user's discretion, with no modification to the dialog manager 14 needed.

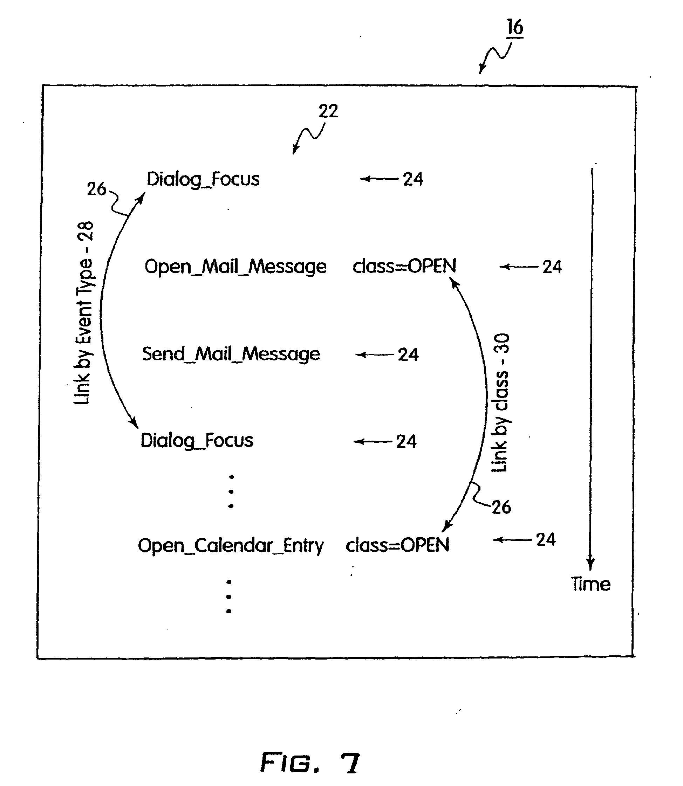

Referring to FIG. 7, the multi-modal history 16 is illustratively presented in greater detail. The multi-modal history 16 is a list of all events which have influenced the state of the system 8 as a whole, and the system's response to those events. The entries in the history 16 may be of several types. These may include user input of all types including both speech and non-speech inputs, responses from the system including results of queries, and prompts for more information, all changes of dialog focus and a descriptor of all successfully completed actions.

In the embodiment shown in FIG. 7, the multi-modal history 16 relies upon a linked list 22. All events 24 concerning the system 8 as a whole are maintained in the order received, but the history makes use of additional forward and backward links 26. In particular, the events 24 are linked by time, event type 28, transaction identifier, and event class 30. Among the event types included for this invention are "SET_DIALOG_FOCUS", "GUI_ACTION", and "COMPLETED_ACTION". The event type "SET_DIALOG_FOCUS" is an indication that dialog focus has been changed, either automatically by the system 8 or deliberately by the user. The event type "GUI_ACTION" indicates that the user has performed some action upon the graphical interface, and the nature of the action is maintained as part of the event. When an action is completed successfully, a "COMPLETED_ACTION" event is placed in the history. The event list 22 includes a complete history of all steps taken to complete the action, including any elements resolved in the course of the execution. Several steps may be taken during the completion of one action. All of the events generated as a result, share one unique transaction identifier. In the current embodiment, this transaction identifier is derived from the system clock time and date. As events within the history are linked also by this transaction identifier, all events pertaining to a particular action may be removed easily when they are no longer needed or relevant.

All events within the history 16 belong to one of several classes. Some examples are "OPEN", "DELETE", and "CHECK". An event belongs to the "OPEN" class when it describes the action of opening an object, such as, for example, a mail message, a calendar entry or an address book entry. All events 22 in the history 16 are also linked by an event type 28.

The numerous links within the history 16 permit efficient searches. If, for example, a request is made for an event of class "OPEN", a link manager 15 (FIG. 6) in the history 16 will return the most recent event of this type. If this is not the correct event, the previous link by class 30 of the event will provide a reference to the previous event of class "OPEN". These two events may have been widely separated in time. This process may be repeated until the correct event is located.

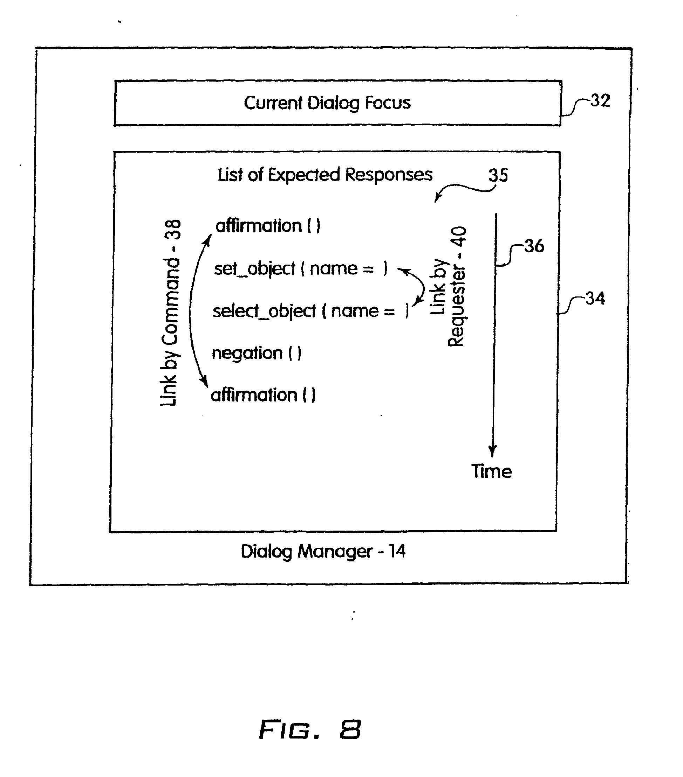

Referring to FIG. 8, the dialog manager 14 is shown in greater detail. The dialog manager 14 maintains a reference to a current dialog focus 32. This is updated each time the dialog focus changes. The dialog manager 14 also maintains a list of expected responses 34. Each time the system 8 poses a question to the user, the method implementing the action being performed is permitted its expected response or responses with dialog manager 14. In the present implementation, this registration is performed by a decision network.

The list of expected responses 34 is implemented as a linked list 35, much like the multi-modal history 16. In this case, the elements are linked by time 36, command 38 and requester 40. The function of this list 35 is easily illustrated through an example. If a method executing a command poses the question "Do you mean Steve Krantz, or Steve Bradner?" to the user, the method expects a response of the form "I mean Steve Bradner" or simply "Steve Bradner". The formal language translation of the first response is "select_object(name=Steve Bradner)" and of the latter response "set_object(name=Steve Bradner)". The method will register the two possible responses with the dialog manager 14 with the commands being "select_object" and "set_object". In addition, each entry will include a field indicating the acceptable argument type is name. The process of resolution of the target 18 of a command makes use of these various components in several ways. First each time a formal language statement is presented to the dialog manager 14, the dialog manager 14 extracts the command portion and examines the list of expected responses 34 to discover if any pending action can make use of the command. If so, the dialog manager 14 also examines the acceptable arguments. In the previous example, the formal language statement "select_object(name=Steve Bradner )" would be found to match one of the expected responses whereas "select_object(object=next )" would not. If a matching expected response is found, the target 18 is taken to be the requester and the formal language statement forwarded to the requester. Subsequently, all expected responses from this requester are purged from the list of expected responses 34. If more than one requester has registered the same expected response, the dialog manager 14 decides which of these is correct. In the present implementation, the dialog manager 14 merely uses the most recent requester, however, in a different implementation, the dialog manager 14 could pose a query to the user for clarification.

If no expected responses match the formal language statement, the several components are used in various ways to resolve the intended target 18 depending on the nature of the command. In certain cases, the target is clear from the command itself. If the user were to ask "Do I have anything scheduled for next Monday?" the intended target is clearly a calendar component and no further resolution is necessary. Often the current dialog focus maintained within the dialog manager is the intended target. If the user says "Change the subject to 'proposal,'" the user is clearly referring to the application with dialog focus. In such cases, the target 18 is taken to be the current dialog focus 32, and the formal language statement is dispatched accordingly.

Certain commands are extremely ambiguous and are permitted in a conversational system to substantially enhance the quality of the interaction. The user can say, for example, "Close that" and the system must react correctly. However, such an utterance includes no information at all about the intended target. This target is resolved by examining the multi-modal history 16. In this particular example, the most recent event of type "COMPLETED_ACTION" and class "OPEN" would be fetched from the history 16. Such an event includes the target 18 of the original command. The target of the new command is taken to be the same as that of the original command and is forwarded to the original target. Hence, if the user says "Close that" the object most recently opened will be closed, be it a calendar entry, spreadsheet cell or other type of object. A further use of the history 16 is made when utterances such as "Undo that" or "Do that again" are received. The most recent event of type "COMPLETED_ACTION" is retrieved from the multi-modal history. Additional fields of such events indicate whether the action can be undone or repeated. The original command is extracted from the "COMPLETED_ACTION" event, and if possible as indicated by these fields, and undone or repeated as appropriate.

A special case is that of canceling an already proceeding action. In this case, the target of the formal language is the method performing this action itself. The most recent event of type "DIALOG_FOCUS," with the owner of the focus being a method, is fetched from the multi-modal history. The formal language is delivered to the method which will then cease executing its action. Subsequently, all events in the multi-modal history 16 bearing the transaction identifier of this now canceled method are purged from the history 16.

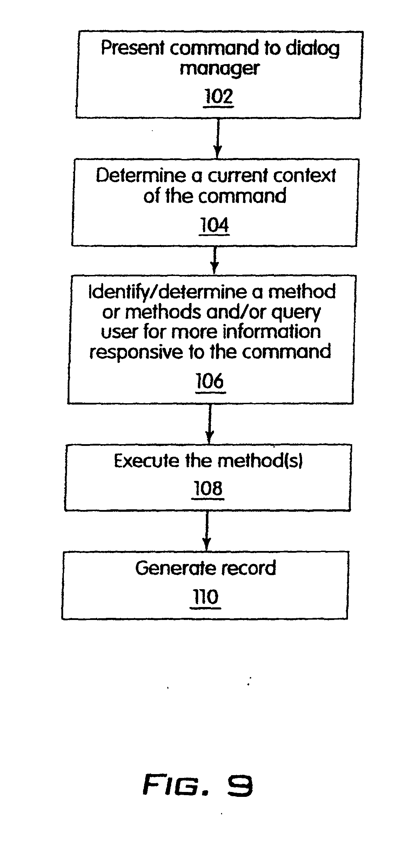

Referring to FIG. 9, a block/flow diagram is shown, which may be implemented with a program storage device, for determining and maintaining dialog focus in a conversational speech system. In block 102, a command associated with an application to is presented to a dialog manager. The command may be in a formal language or be a direct utterance. The command or response may be input to the dialog manager from a user from any of a plurality of multi- mode devices. For example, a computer, a personal digital assistant, a telephone, etc. The application associated with the command is unknown to the dialog manager at the time the command is made, and therefore, the application which the command is intended for should first be deduced. In block 104, the dialog manager determines a current context of the command by reviewing a multi-modal history of events. The current context of the command is ascertained by reviewing a multi-modal history of events which preferably includes a linked list of all events in the multi-modal history. The events in the multi-modal history may include at least one of events linked by time, by type, by transaction, by class and by dialog focus. A current context of the command is determined by reviewing the multi- modal history of events, a current dialog focus maintained in the dialog manager and a list of expected responses also maintained in the dialog manager to provide a reference for determining the current context.

In block 106, at least one method is determined responsive to the command based on the current context. The method is determined based on the all active applications referenced using a component control to determine the method(s) which are appropriate based on the current context of the command. If a method cannot be determined or more information is needed, a query is sent to the user for information needed to resolve the current context or information needed to take an appropriate action. In block 108, the method(s) are executed responsive to the command or response to the query associated with the application. This means the system automatically associates the command given to an application which is active or inactive depending on the context of the command or response. In block 110, a record is maintained in the dialog manager and in the multi-modal history of any changes to states which the system has undergone. Records which are no longer relevant may be removed.

FIGS. 10 to 14 illustrate a system for modeless operation of a multi-modal user interface comprising:
a user interface adapted for receiving commands;
a dialog manager adapted to receive the commands from the user interface;
a table of decision networks stored in a memory, the table providing cross-references between commands and decision networks; and
a plurality of decision networks responsive to the dialog manager, the dialog manager instantiating decision networks based on the table of decision networks to respond to the commands.

In FIG. 10, a conversational system 50 used to provide modeless operation is shown. System 50 includes a dialog manager 52 which is responsive to a command or response provided in block 54. A table of decision networks 56 is included which represents a plurality of decision networks 58. A command or response, from block 54, from the user is presented to the dialog manager 52 for processing. Block 54 may include an interface as described with reference to FIGS.1 to 5. In one embodiment, the command given to the dialog manager 52 is not the actual spoken command, but rather an element of a formal language representing the meaning of the command. In this manner, there may be many human utterances which convey the same meaning to the dialog manager 52. Alternately, actual human language may be given as the command provided the dialog manager 52 is capable of handling this type of command. That is, the dialog manager can recognize spoken utterances. Illustratively, an actual form of this formal language may include "command(argument1=value1, ..., argumentj=valuej)" where "command" represents the nature of the action to be taken or response, and "arguemtl=valuel" represents a qualifier to this command. In this manner, the utterance "Do I have anything scheduled for tomorrow?" would be transformed into the formal language "query_calendar(day=tommorow)". The execution of a users command is initiated by the dialog manager 52. The command portion of the formal language is extracted and compared against the table of available decision networks 56. If a corresponding entry is found, the dialog manager 52 creates a new instance of a decision network 58. The table of decision networks 56 is not necessarily statically bound to the dialog manager 52. It may be modified at any time and different tables may be provided for the several users of the system 50. The decision network 58 selected in accordance with table 56 is traversed in its own thread of execution. Thus, multiple decision networks 58 may be active simultaneously, and as they are dynamically instantiated, several instances of the same network may even be active at the same time. It is this dynamic instantiation and the multi-threading that are needed to provide the desired modeless operation. The decision networks 58 may be thought of as recipes for accomplishing a user's intended action. At each node of the network 58, the network 58 sends a query or command to an application 59, or poses a question to the user. The network 58 then awaits a response, and on the basis of this response, performs a transition to a new state or exits. The queries sent by the decision network 58 are requests for information necessary to the successful completion of the user's action, but this information is not necessarily of direct interest to the user. For example, if the user's utterance was "Change the subject of this message to 'Proposal'", the decision network implementing this command would first check to see if the current application in fact had a subject field. If it indeed has a subject field, this information would not be presented to the user. However, if the user's utterance was "Do I have any new mail?", the result of the query issued by the decision network would naturally be provided to the user. The commands issued by the decision network 58 may influence the state of the application. If the user were to say "Go to the next appointment", the application providing calendaring functions would, as the result of a method issued by the decision network 58, change its selected appointment to the next appointment within its list of appointments. Advantageously, this can be done while employing one or more different applications, for example, typing a letter in a word processing application, and employing a spreadsheet.

If the decision network 58 needs more information from the user, the decision network 58 presents a question to the user and awaits a response. In this case, the decision network 58 registers the type of responses it expects with the dialog manager 52, as described with reference to FIGS. 6 to 10. The decision networks 58 act as finite state automata, and as such are independent agents. The decision networks 58 may interact with each other, and may even request that a new decision network be instantiated. An example of this behavior is the performance of the system 50 when the user responds in the positive to a "yes/no" question, i.e., the decision network 58 implementing the concept of "AFFIRMATION" will independently seek out that decision network which posed the question and deliver the affirmative result. A decision network 58 will ask that another network be created when it needs some subsidiary service. For example, if the user were to say "Send a new message to Mary" the decision network implementing the concept of "SEND_MAIL_MESSAGE" would request the help of a decision network implementing name resolution to resolve the full name and mail address of the person, Mary. The decision networks 58 may be terminated at any time by the dialog manager 52.

Referring to FIG. 11 a flow chart showing modeless operation is illustratively shown. Modeless operation is provided by this arrangement through the use of the decision networks 58 as independent automata. In FIG. 11, each vertical column represents a separate thread of execution. It is noted that the user interacts only with the dialog manager 52. Thus, for modeless operation, the dialog manager 52 remains available at virtually all times.

The action presented in FIG. 11 is initiated when the user says "Open the one from Steve". The formal language translation of this is "open_object(sender=Steve)". The dialog manager 56 examines its table of decision networks 56 (FIG. 10) and instantiates that network 58a implementing the concept of "OPEN_OBJECT". This network 58a examines the arguments passed to it, and requests that the dialog manager 52 create an instance of the resolveSender decision network 58b for resolving the name "Steve". This new decision network 58b performs its work in a separate thread of execution from either the dialog manager 52 or the original decision network 58a. The resolveSender decision network 18b makes use of names of senders in a mail application by sending a query to a mail application list 66. Decision network 58b further examines a multi-modal history 68 to see if there had been a previous reference to a person named "Steve". Suppose here that the resolveSender network 58b found two people named "Steve", say "Steve Krantz" and "Steve Bradner". This ambiguity must, of course, be resolved by the user. The resolveSender network 58b requests that the dialog manager 52 produce a prompt 60 to this effect for the user. Note that once this prompt 60 has been presented, the dialog manager 52 is again free. The user need not respond to the prompt 60, but may if he wishes perform some new, unrelated action, responding to the prompt 60 later, if at all.

After a user 62 responds with the utterance "I mean Steve Krantz" the action of open the message may proceed. The utterance is translated into the formal language "select_object(object=Steve Krantz)" (in block 54 of FIG. 10) and passed to the dialog manager 52. As before, the dialog manager instantiates a decision network 58c implementing this concept (i.e., select object). This new decision network 58c deduces that the resolveSender decision network 58b had posed the question initially, and passes the result to decision network 58c. Now the work of the resolveSender network 58b is completed and it returns the resolved name to the original OpenObject decision network 58a. The arguments originally given to this network 58a are now completely resolved so the network sends the desired command to a mail application 66. Subsequently it creates a record of what the decision network has done, including all of the steps in the resolution sequence. After each of the networks completes its appointed task, it exits, removing all trace of itself except for this record.

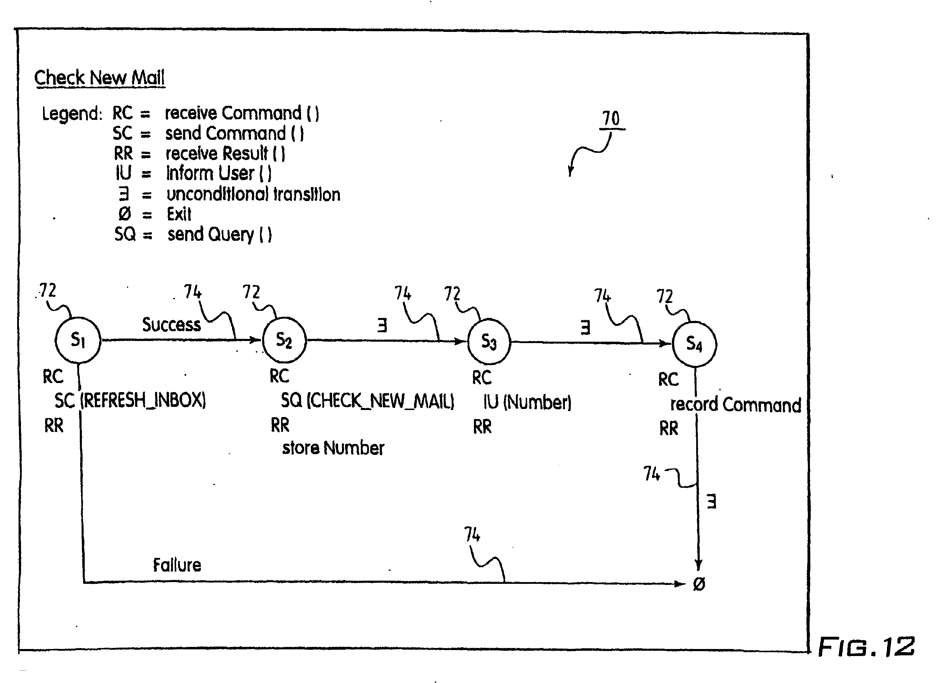

Referring to FIG. 12, a schematic diagram of a simple decision network 70 is illustratively shown. Here, states 72 of the network 70 are indicated by circles and transitions 74 are indicated by lines between states 72. Each state 72 of the decision network 70 implements two methods: receiveCommand and receiveResult. When the receiveCommand method is entered, the decision network 70 issues a query, command, or prompt as noted above. The method then awaits the result. Upon receipt of this result, the receiveResult method is entered. At this point, the network 70 examines the result and decides which state should be the next state (i.e., S2, S3, S4, etc.).

The decision network 70 implements the concept "CHECK_NEW_MAIL" which would used to act upon a user's utterance of the type "Please check my mail". The decision network 70 is entered at the state labeled S1. This state issues the command "REFRESH_INBOX" to a mail application (i.e., mail application 66 of FIG. 11). The result of this command will be either "Success" after the inbox is successfully refreshed, or "Failure". The receiveResult method in state S1 is entered. If the result is success, the next state will be S2. If it is not, the decision network 70 exits.

The receiveCommand in state S2 issues the command "CHECK_NEW_MAIL" to the mail application 66. The response will be the number of new messages. In the receiveResult method, this number is stored away and the next state will be S3. In this state's receiveCommand method a prompt encapsulating this number of new messages is generated and presented to the user. The next state will be S4 in which the decision network records what it has done. Subsequently the network 70 exits.

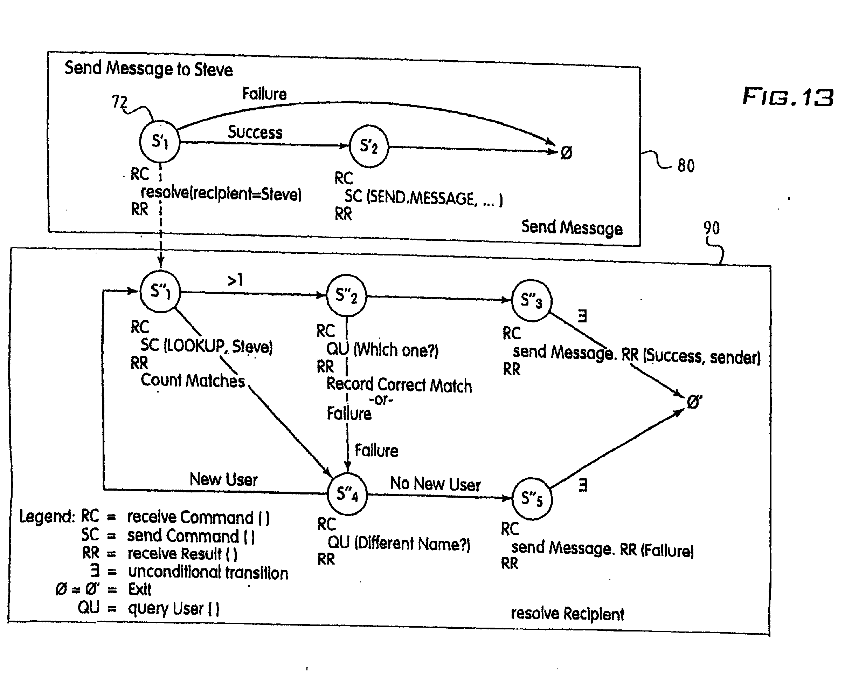

Referring to FIG. 13, a schematic illustrates a set of two decision networks 80 and 90 performing the action corresponding to the utterance "Send a new message to Steve" which is translated to the formal language statement "send_message(recipient=Steve)". The action begins at state S1' in the sendMessage decision network 80. The receiveCommand (RC) method requests that the dialog manager 52 create an instance of the resolveRecipient (RR) decision network 90 to resolve the recipient's name. When decision network 90 finishes its work, it returns a result of "Success" or "Failure" to sendMessage decision network 80. Within the receiveResult method of S1', the next state is set to S2' if the result is "Success", otherwise the sendMessage decision network 80 exits. Within the receiveCommand (RC) method of S2', the command "SEND_MESSAGE" is sent to the mail application 66 (see FIG. 11) along with the previously resolved name of the intended recipient.

The action of the resolveRecipient decision network 90 begins at its state S1''. The network 90 sends a command to the address book component "LOOKUP, Steve" and awaits the result which will be that there are no people named "Steve" in the address book, that there is exactly one, or that there are more than one. This result is examined within the receiveResult (RR) method of S1''. For simplicity, the transition from state S1'' to S3'' which would be obtained in the case of exactly one person is not shown in FIG. 13.

If the address book was unable to provide the name of anyone named "Steve" a transition is made to state S4'' where a question (QU) of the form "I could not find the address of Steve. Would you like to select someone else?" is posed to the user. If the user supplies the name of a new person, a transition is made to state S1'', i.e., the initial state, and the resolution process begins again. If the user responds in the negative, a transition is make to state S5''. Within state S5'' the result "Failure" is returned to the waiting sendMessage decision network 80 and the resolveRecipient decision network 90 subsequently exits.

If the address book includes the names of more than one person named "Steve" the user must resolve this ambiguity. In this case, a transition is made to state S2'' in which a query of the form "Do you mean Steve Krantz or Steve Bradner?" is presented to the user. If the user selects one of these choices, that choice is recorded and a transition is made to state S3'' where the result "Success" and the resolved name are delivered to the sendMessage decision network 80. If the user does not select one of these names, perhaps because the name "Steve" was not the correct name to start with, a transition is made to state S4'' so that the user may select a new name, as before.

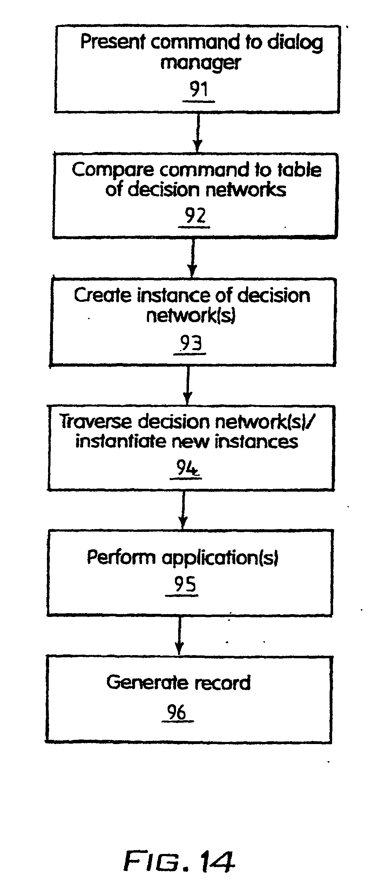

Referring to FIG. 14, a block/flow diagram is shown for a system/method in accordance with the present invention. The system/method may be implemented by a program storage device readable by machine, tangibly embodying a program of instructions executable by the machine to perform method steps for modeless operation of a multi-modal user interface through implementation of independent decision networks. In block 91, a command is present to a dialog manager by a user. The command is compared to a table of decision networks to determine if a corresponding decision network entry exists, in block 92. The dialog manager creates a new instance of a decision network when a corresponding decision network entry is found, in block 93. In block 94, the new instance of the decision network is traversed in an isolated thread of execution such that a plurality of decision networks of a same instance or different instances may be active simultaneously. Also, decision networks (or the dialog manager) may instantiate new instances for services needed by the active decision networks or for other commands of the user. In block 95, the new instance of the decision network is executed responsive to the command. This may be performed by calling one or more applications, requesting new information from the user, etc. In block 96, a record of activity is generated for each decision network's activity.

The present invention provides a conversational system that supports access from multiple client devices using multiple input modalities. Examples of client devices supported may include desktop computers, telephones, and personal digital assistants (PDAs). The invention describes the overall architecture to support such a conversational system, including the innovations incorporated to preserve the personality and conversational context across multiple access methods, and the innovations incorporated to customize the presentation of information for individual client devices.

Having described preferred embodiments of a method and system for multi-client access to a dialog system (which are intended to be illustrative and not limiting), it is noted that modifications and variations can be made by persons skilled in the art in light of the above teachings. It is therefore to be understood that changes may be made in the particular embodiments of the invention disclosed which are within the scope of the appended claims.

## Claims

1. A method for accessing a dialog system (101) employing a plurality of different clients comprising:
providing a first client device (100) for accessing a conversational system;
presenting a command to the conversational system (300) by converting the command to a form understandable to the conversational system; and
interpreting the command by employing a mediator (302), **characterised by** also employing a dialog manager (303) and a multi-modal history (304) to determine the intent of the command based on the context of the command;
determining by the mediator a second client device based on a predetermined device preference (305) and on the first client;
based on the command context the first and the second client selecting an application to perform the command; and
sending results of the performance of the command to the second client device.

2. A method according to claim 1, wherein the first client device is the same as the second client device.

3. A method according to claim 1, wherein the second client device is a plurality of client devices.

4. A method according to claim 3, wherein the first client device and the plurality of client devices include at least one of a telephone, a computer and a personal digital assistant.

5. A method according to any preceding claim, wherein the command is presented in natural speech, the method further comprising the steps of recognizing the speech and converting the speech to a formal language.

6. A method according to any preceding claim, further comprising the steps of outputting the results of the performance of the command to the second client device by speech synthesis.

7. A method according to any preceding claim, wherein the command is presented graphically, the method further comprising the steps of responding to the command by one or both of a graphical result and synthesized speech.

8. A method according to any preceding claim, further comprising the step providing a component abstraction interface to interface with applications such that the conversational system is shielded from details of execution of the application.

9. A method according to any preceding claim, further comprising the step of querying a user via the first client device for one of information about the device preference and clarification of command information.

10. A method according to any preceding claim, wherein the mediator employs information about one of the first client device and the second client device to determine the context of the command.

11. A program storage device readable by machine, embodying a program of instructions executable by the machine to perform method steps for accessing a dialog system employing a plurality of different clients, the method steps comprising:
providing a first client device (100) for accessing a conversational system (300);
presenting a command to the conversational system by converting the command to a form understandable to the conversational system; and
interpreting the command by employing a mediator (302), **characterised by** also employing a dialog manager (303) and a multi-modal history (304) to determine the intent of the command based on a context of the command;
determining by the mediator a second client device based on a predetermined device preference and on the first client;
based on the command context the first and the second client
selecting an application to perform the command; and
sending results of the performance of the command to the second client device.

12. A program storage device according to claim 11, wherein the first client device is the same as the second client device.

13. A program storage device according to claim 12, wherein the second client device is a plurality of client devices.

14. A program storage device according to claim 13, wherein the first client device and the plurality of client devices include at least one of a telephone, a computer and a personal digital assistant.

15. A program storage device according to any of claims 11 to 14, the command is presented in natural speech, the including means for presenting the command in natural speech , comprising the steps of recognizing the speech and converting the speech to a formal language.

16. A program storage device according to any of claims 11 to 15, further comprising means for outputting the results of the performance of the command to the second client device by speech synthesis.

17. A program storage device according to any of claims 11 to 16, wherein the command is presented graphically, and wherein the device comprises means for responding to the command by one or both of a graphical result and synthesized speech.

18. A program storage device according to any of claims 11 to 17, further comprising means for providing a component abstraction interface to interface with applications such that the conversational system is shielded from details of execution of the application.

19. A program storage device according to any of claims 11 to 18, further comprising means for querying a user via the first client device for one of information about the device preference and clarification of command information.

20. A program storage device according to any of claims 11 to 19, wherein the mediator employs information about one of the first client device and the second client device to determine the context of the command.

21. A system for accessing a dialog system employing a plurality of different clients, comprising:
a device handling and abstraction system (200) adapted to provide input and output interfacing to a plurality of different client devices, the device handling and abstraction system for receiving commands from at least one client device and converting the commands to a form acceptable to a conversational system (300);
the conversational system coupled to the device handling and abstraction system for receiving converted commands, the conversational system adapted to interpret the converted commands based on a context of the command to determine an appropriate application responsive to the converted command, the conversational system including a device preference to which results of executing the converted commands are sent; and
an application abstraction system coupled to the conversational system and adapted for determining which applications are appropriate for executing the converted command, the application abstraction system being adapted to interface with a plurality of applications and to shield the conversational system from communications with the applications.

22. A system according to claim 21, wherein a command is input to a first client and a result is received by the first client.

23. A system according to claim 21 or 22, wherein the commands include graphical commands and speech commands.

24. A system according to claim 21 to 23, wherein the results of executing the converted commands are conveyed to a client device as one of or both of synthesized speech and graphics.

25. A system according to any of claims 21 to 24, wherein the device preference includes a plurality of client devices.

26. A system according to any of claims 21 to 25, wherein the converted commands include a formal language converted from natural speech.

27. A system according to any of claims 21 to 26, wherein the conversational system includes a dialog manager and a multi- modal history to determine the intent of the converted commands based on a context of the commands.

28. A system according to any of claims 21 to 27, wherein the conversational system includes a mediator which employs information about at least one of the plurality of different client devices and a client device of the device preference to determine the context of the command.

29. A system according to any of claims 21 to 28, wherein the first client device and the plurality of client devices include at least one of a telephone, a computer and a personal digital assistant.

## Patentansprüche

1. Verfahren zum Zugreifen auf ein Dialogsystem (101), das eine Vielzahl verschiedener Clients verwendet, wobei das Verfahren Folgendes umfasst:
Bereitstellen einer ersten Client-Einheit (100) zum Zugreifen auf ein Gesprächssystem;
Übergeben eines Befehls an das Gesprächssystem (300), indem der Befehl in eine Form umgewandelt wird, die das Gesprächssystem erkennt; und
Übersetzen des Befehls durch das Verwenden eines Vermittlers (302), **dadurch gekennzeichnet, dass** auch ein Dialogverwalter (303) und multimodale Stammdaten (304) zum Ermitteln der Befehlsabsicht auf der Grundlage des Befehlszusammenhangs verwendet werden;
Ermitteln einer zweiten Client-Einheit durch den Vermittler auf der Grundlage einer vorgegebenen Einheitenbevorzugung (305) und des ersten Client;
Auswählen einer Anwendung zum Ausführen des Befehls auf der Grundlage des Befehlszusammenhangs und des zweiten Client; und
Senden der Ergebnisse der Befehlsausführung an die zweite Clienteinheit.

2. Verfahren nach Anspruch 1, wobei die erste Clienteinheit mit der ersten Clienteinheit übereinstimmt.

3. Verfahren nach Anspruch 1, wobei die zweite Client-Einheit aus einer Vielzahl von Client-Einheiten besteht.

4. Verfahren nach Anspruch 3, wobei die erste Client-Einheit und die Vielzahl von Client-Einheiten wenigstens ein Telefon, einen Computer oder einen persönlichen digitalen Assistenten (PDA) umfasst.

5. Verfahren nach einem der vorangehenden Ansprüche, wobei der Befehl in einer natürlicher Sprache vorliegt und das Verfahren weiterhin die Schritte des Erkennens und Umwandelns der Sprache in eine formelle Sprache umfasst.

6. Verfahren nach einem der vorangehenden Ansprüche, das ferner die Schritte der Ausgabe der Ergebnisse der Befehlsausführung an die zweite Clienteinheit durch eine Sprachsynthese umfasst.

7. Verfahren nach einem der vorangehenden Ansprüche, wobei der Befehl grafisch vorgelegt wird und das Verfahren ferner die Schritte des Antwortens auf den Befehl mit einem grafischen Ergebnis und/oder synthetisierter Sprache umfasst.

8. Verfahren nach einem der vorangehenden Ansprüche, das ferner den Schritt des Bereitstellens einer Komponenten-Abstraktionsschnittstelle zum Vermitteln zwischen Anwendungen umfasst, sodass das Gesprächssystem von den Ausführungseinzelheiten der Anwendung abgeschirmt wird.

9. Verfahren nach einem der vorangehenden Ansprüche, das ferner den Schritt des Befragens eines Nutzers über die erste Client-Einheit nach Daten bzgl. der Einheitenbevorzugung und zur Erläuterung von Befehlsdaten umfasst.

10. Verfahren nach einem der vorangehenden Ansprüche, worin der Vermittler Informationen über die erste Client-Einheit und die zweite Client-Einheit verwendet, um den Befehlszusammenhang zu ermitteln.

11. Maschinenlesbare Programm-Speichereinheit, die ein Befehlsprogramm umsetzt, das von einer Maschine zum Ausführen von Verfahrensschritten zum Zugreifen auf ein Dialogsystem mit einer Vielzahl von verschiedenen Clients ausgeführt werden kann, wobei die Verfahrensschritte Folgendes umfassen:
Bereitstellen einer ersten Client-Einheit (100) zum Zugreifen auf ein Gesprächssystem (300);
Übergeben eines Befehls an das Gesprächssystem, indem der Befehl in eine für das Gesprächssystem erkennbare Form umgewandelt wird; und
Übersetzen des Befehls mittels eines Vermittlers (302), **dadurch gekennzeichnet, dass** auch ein Dialogverwalter (303) und multimodale Stammdaten (304) zum Ermitteln der Befehlsabsicht auf der Grundlage eines Befehlszusammenhangs verwendet werden;
Ermitteln einer zweiten Client-Einheit durch den Vermittler auf der Grundlage einer Einheitenbevorzugung und des ersten Client;
Auswählen einer Anwendung durch den ersten und zweiten Client zum Ausführen des Befehls auf der Grundlage des Befehlszusammenhangs; und
Senden der Ergebnisse der Befehlsausführung an die zweite Client-Einheit.

12. Programm-Speichereinheit nach Anspruch 11, wobei die erste Client-Einheit mit der zweiten Client-Einheit übereinstimmt.

13. Programm-Speichereinheit nach Anspruch 2, wobei die zweite Client-Einheit aus einer Vielzahl von Client-Einheiten besteht.

14. Programm-Speichereinheit gemäß Anspruch 13, wobei die erste Client-Einheit und die Vielzahl von Client-Einheiten wenigstens ein Telefon, einen Computer oder einen persönlichen digitalen Assistenten (PDA) umfasst.

15. Programm-Speichereinheit gemäß einem der Ansprüche 11 bis 14, wobei der Befehl in natürlicher Sprache übergeben wird und das einschließende Mittel zum Übergeben des Befehls in natürlicher Sprache e die Schritte des Erkennens und Umwandelns der Sprache in eine formelle Sprache umfasst.

16. Programm-Speichereinheit gemäß einem der Ansprüche 11 bis 15, die ferner ein Mittel zum Ausgeben der Ergebnisse der Befehlsausführung an die zweite Client-Einheit durch eine Sprachsynthese umfasst.

17. Programm-Speichereinheit gemäß einem der Ansprüche 11 bis 16, worin der Befehl grafisch vorgegeben wird und die Einheit ein Mittel zum Antworten auf den Befehl über ein grafisches Ergebnis und/oder synthetisierte Sprache umfasst.

18. Programm-Speichereinheit gemäß einem der Ansprüche 11 bis 17, die ferner ein Mittel zum Bereitstellen einer Komponenten-Abstraktionsschnittstelle zum Vermitteln zwischen Anwendungen umfasst, sodass das Gesprächssystem von den Einzelheiten der Ausführung durch die Anwendung abgeschirmt ist.

19. Programm-Speichereinheit gemäß einem der Ansprüche 11 bis 18, die ferner ein Mittel zum Befragen eines Nutzers über die erste Client-Einheit nach Daten bzgl. der Einheitenbevorzugung und zur Erläuterung von Befehlsdaten umfasst.

20. Programm-Speichereinheit gemäß einem der Ansprüche 11 bis 19, worin der Vermittler Daten bzgl. der ersten oder zweiten Client-Einheit verwendet, um den Befehlszusammenhang zu ermitteln.

21. System zum Zugreifen auf ein Dialogsystem, das eine Vielzahl von verschiedenen Clients verwendet, wobei das System Folgendes umfasst:
ein Einheitenverwaltungs- und Abstraktionssystem (200), das zum Bereitstellen einer Ein- und Ausgabevermittlung an die Vielzahl verschiedener Clients geeignet ist, Befehle von wenigstens einer Client-Einheit empfängt und die Befehle in eine für ein Gesprächssystem (300) geeignete Form umwandelt;
wobei das Gesprächssystem mit dem Einheitenverwaltungs- und Abstraktionssystem zum Empfangen umgewandelter Befehle verbunden ist, zum Übersetzen der umgewandelten Befehle auf der Grundlage eines Befehlszusammenhangs geeignet ist, um eine geeignete Anwendung in Reaktion auf den umgewandelten Befehl zu ermitteln, und wobei das Gesprächssystem eine Einheitenbevorzugung beinhaltet, an die Ergebnisse der Ausführung umgewandelter Befehle gesendet werden; und
ein Anwendungsabstraktionssystem, das mit dem Gesprächssystemverbunden ist und zum Ermitteln geeignet ist, welche Anwendungen zum Ausführen des umgewandelten Befehls richtig sind, und das Anwendungsabstraktionssystem zum Vermitteln zwischen einer Vielzahl von Anwendungen und zum Abschirmen des Gesprächssystem von Datenübertragungen mit den Anwendungen geeignet ist.

22. System nach Anspruch 21, worin ein Befehl in einen ersten Client eingegeben und ein Ergebnis vom ersten Client empfangen wird.

23. System nach Anspruch 21 oder 22, worin die Befehle grafische Befehle und Sprachbefehle beinhalten.

24. System nach Anspruch 21 bis 23, worin die Ergebnisse der Ausführung der umgewandelten Befehle als synthetisierte Sprache und/oder Grafik an eine Client-Einheit übermittelt werden.

25. System nach einem der Ansprüche 21 bis 24, worin die Einheitenbevorzugung eine Vielzahl von Clienteinheiten einschließt.

26. System nach einem der Ansprüche 21 bis 25, worin die umgewandelten Befehle eine formelle Sprache beinhalten, die aus der natürlichen Sprache umgeformt wurde.

27. System nach einem der Ansprüche 21 bis 26, wobei das Gesprächssystem einen Dialogmanager und multimodale Stammdaten umfasst, um die Absicht der umgewandelten Befehle auf der Grundlage eines Zusammenhangs der Befehle zu ermitteln.

28. System nach einem der Ansprüche 21 bis 27, worin das Gesprächssystem einen Vermittler, der Daten bzgl. wenigstens einer aus der Vielzahl verschiedener Client-Einheiten verwendet, und eine Client-Einheit aus der Einheitenbevorzugung umfasst, um den Befehlszusammenhang zu ermitteln.

29. System nach einem der Ansprüche 21 bis 28, worin die erste Client-Einheit und die Vielzahl von Client-Einheiten wenigstens ein Telefon, einen Computer oder einen persönlichen digitalen Assistenten (PDA) umfassen.

## Revendications

1. Un procédé pour l'accès à un système de dialogue (101) utilisant une pluralité de clients différents, comprenant :
la fourniture d'un premier dispositif client (100) pour accéder à un système conversationnel
la présentation d'une instruction au système conversationnel (300), par conversion de l'instruction en une forme compréhensible par le système conversationnel, et
l'interprétation de l'instruction en utilisant un médiateur (302), **caractérisé par** le fait d'utiliser également un gestionnaire de dialogue (303) et un historique multi-modal (304) pour déterminer l'intention de l'instruction, d'après le contexte de l'instruction ;
la détermination par le médiateur d'un deuxième dispositif client, d'après une préférence de dispositif (305) prédéterminée et d'après le premier client ;
d'après le contexte d'instruction du premier et du deuxième client, la sélection d'une application pour exécuter une instruction ; et
l'envoi de résultats de l'exécution de l'instruction au deuxième dispositif client.

2. Un procédé selon la revendication 1, dans lequel le premier dispositif client est le même que le deuxième dispositif client.

3. Un procédé selon la revendication 1, dans lequel le deuxième dispositif client est une pluralité de dispositifs client.

4. Un procédé selon la revendication 3, dans lequel le premier dispositif client et la pluralité de dispositifs client comprennent au moins l'un d'un téléphone, d'un ordinateur et d'un assistant numérique personnel.

5. Un procédé selon l'une quelconque des revendications précédentes, dans lequel l'instruction est présentée en voix naturelle, le procédé comprenant en outre les étapes consistant à reconnaître la voix et convertir la voix en un langage formel.

6. Un procédé selon l'une quelconque des revendications précédentes, comprenant en outre les étapes de fourniture des résultats de l'exécution de l'instruction au deuxième dispositif client, par une synthèse vocale.

7. Un procédé selon l'une quelconque des revendications précédentes, dans lequel l'instruction est présentée graphiquement, le procédé comprenant en outre les étapes de réponse à l'instruction, par un ou les deux, des résultats graphiques et d'une voix synthétisée.

8. Un procédé selon l'une quelconque des revendications précédentes, comprenant en outre l'étape de fourniture d'une interface d'abstraction du composant pour interfacer avec des applications, de manière que le système conversationnel soit isolé des détails de l'exécution de l'application.

9. Un procédé selon l'une quelconque des revendications précédentes, comprenant en outre l'étape de consultation d'un utilisateur via le premier dispositif client, pour une, d'une information au sujet de la préférence du dispositif et de la clarification de l'information de l'instruction.

10. Un procédé selon l'une quelconque des revendications précédentes, dans lequel le médiateur utilise une information au sujet d'un, du premier dispositif client et du deuxième dispositif client, afin de déterminer le contexte de l'instruction.

11. Un dispositif de stockage de programme lisible par machine, mettant en oeuvre un programme d'instructions exécutables par la machine pour accomplir des étapes de procédé pour accéder à un système de dialogue utilisant une pluralité de clients différents, les étapes du procédé comprenant:
la fourniture d'un premier dispositif client (100) pour accéder à un système conversationnel (300) ;
la présentation d'une instruction au système conversationnel par conversion de l'instruction à une forme compréhensible du système conversationnel ; et
l'interprétation de l'instruction par utilisation d'un médiateur (302), **caractérisé par** le fait d'utiliser également un gestionnaire de dialogue (303) et un historique multi-modal (304), pour déterminer l'intention de l'instruction basée d'après un contexte de l'instruction ;
la détermination, par le médiateur, d'un deuxième dispositif client, d'après une préférence de dispositif prédéterminé, et le premier client, d'après le contexte d'instruction du premier et d'après le deuxième client ;
la sélection d'une application pour exécuter l'instruction ; et
l'envoi des résultats de l'exécution de l'instruction au deuxième dispositif client.

12. Un dispositif de stockage de programme selon la revendication 11, dans lequel le premier dispositif client est le même que le deuxième dispositif client.

13. Un dispositif de stockage de programme selon la revendication 12, dans lequel le deuxième dispositif client est une pluralité de dispositifs client.

14. Un dispositif de stockage de programme selon la revendication 13, dans lequel le premier dispositif client et la pluralité de dispositifs client comprennent au moins l'un d'un téléphone, d'un ordinateur et d'un assistant numérique personnel.

15. Un dispositif de stockage de programme selon l'une quelconque des revendications 11 à 14, dans lequel l'instruction est présentée en voix naturelle, comprenant des moyens pour présenter l'instruction en voix naturelle, comprenant les étapes consistant à reconnaître la voix et convertir la voix en un langage formel.

16. Un dispositif de stockage de programme selon l'une quelconque des revendications 1 à 15, comprenant en outre des moyens pour fournir en sortie les résultats d'exécution de l'instruction au deuxième dispositif client, par une synthèse vocale.

17. Un dispositif de stockage de programme selon l'une quelconque des revendications 11 à 16, dans lequel l'instruction est présentée graphiquement et dans lequel le dispositif comprend des moyens pour répondre à l'instruction par un ou les deux des résultats graphiques et d'une voix synthétisée.

18. Un dispositif de stockage de programme selon l'une quelconque des revendications 11 à 17, comprenant en outre des moyens pour fournir une interface d'abstraction de composant pour interfacer avec des applications, de manière que le système conversationnel soit isolé des détails de l'exécution de l'application.

19. Un dispositif de stockage de programme selon l'une quelconque des revendications 11 à 18, comprenant en outre des moyens pour consulter un utilisateur via le premier dispositif client pour une, d'une information au sujet des préférences du dispositif et d'une clarification de l'information d'instruction.

20. Un dispositif de stockage de programme selon l'une quelconque des revendications 11 à 19, dans lequel le médiateur utilise une information au sujet d'un, du premier dispositif client et du deuxième dispositif client, afin de déterminer le contexte de l'instruction.

21. Un système d'accès à un système de dialogue utilisant une pluralité de clients différents, comprenant :
un système de traitement et d'abstraction de dispositif (200), adapté pour fournir une entrée et une sortie interfaçant envers une pluralité de dispositifs clients différents, le système de traitement et d'abstraction de dispositif devant recevoir des instructions d'au moins un dispositif client et convertir les instructions en une forme acceptable pour un système conversationnel (300) ;
le système conversationnel étant couplé au système de traitement et d'abstraction de dispositif pour recevoir des instructions converties, le système conversationnel étant adapté pour interpréter les instructions converties d'après un contexte de l'instruction, afin de déterminer une application appropriée en réponse à l'instruction convertie, le système conversationnel comprenant une préférence de dispositif auquel les résultats de l'exécution des instructions converties sont envoyés ; et
un système d'abstraction d'application, couplé au système conversationnel et adapté pour déterminer quelles applications sont appropriées pour exécuter l'instruction convertie, le système d'abstraction d'application étant adapté pour interfacer avec une pluralité d'applications et pour isoler le système conversationnel de communications avec les applications.

22. Un système selon la revendication 21, dans lequel une instruction est introduite à un premier client et un résultat est reçu par le premier client.

23. Un système selon la revendication 21 ou 22, dans lequel les instructions comprennent des instructions graphiques et des instructions vocales.

24. Un système selon la revendication 21 à 23, dans lequel les résultats de l'exécution des instructions converties sont transférés à un dispositif client sous forme d'un ou deux, parmi une voix synthétisée et des graphiques.

25. Un système selon l'une quelconque des revendications 21 à 24, dans lequel la préférence de dispositif comprend une pluralité de dispositifs client.

26. Un système selon l'une quelconque des revendications 21 à 25, dans lequel les instructions converties comprennent un langage formel, converti depuis une voix naturelle.

27. Un système selon l'une quelconque des revendications 21 à 26, dans lequel le système conversationnel comprend un gestionnaire de dialogue et un historique multi-modal, pour déterminer le but des instructions converties d'après un contexte des instructions.

28. Un système selon l'une quelconque des revendications 21 à 27, dans lequel le système conversationnel comprend un médiateur, qui utilise une information au sujet d'au moins l'un, de la pluralité des différents dispositifs client et d'un dispositif client de la préférence de dispositif, pour déterminer le contexte de l'instruction.

29. Un système selon l'une quelconque des revendications 21 à 28, dans lequel le premier dispositif client et la pluralité de dispositifs client comprennent au moins l'un, d'un téléphone, d'un ordinateur et d'un assistant numérique personnel.
